# EUROPEAN PATENT SPECIFICATION

(11) **EP 2 643 594 B1**
(45) Date of publication and mention of the grant of the patent: **08.03.2017**
(21) Application number: 11810791.1
(22) Date of filing: 28.11.2011
(51) Int. Cl.: F04D 7/04, F04D 15/00, F04D 15/02, F04D 29/042, B60P 3/22

(54) **PUMP FOR PUMPING LIQUID CONTAINING SOLID MATTER**
PUMPE ZUM PUMPEN FESTSTOFFHALTIGER FLÜSSIGKEITEN
POMPE DE POMPAGE DE LIQUIDES CONTENANT DES SOLIDES

(30) Priority: 28.11.2010 DK 201001078 P
(43) Date of publication of application: 02.10.2013
(73) Proprietor: Sørensen, Harry Højvang, 6818 Årre (DK)
(72) Inventor: Sørensen, Harry Højvang, 6818 Årre (DK)
(74) Representative: Kristensen, Martin Hjelm
(86) International application number: PCT/DK2011/000141
(87) International publication number: WO 2012/069055

(56) References cited:
- EP-A1- 1 767 788
- WO-A1-00/64701
- WO-A1-2007/143994
- WO-A1-2009/020420
- DE-A1-102005 056 200
- FR-A- 1 563 183
- GB-A- 751 908
- GB-A- 1 158 920
- SU-A1- 1 265 398
- US-A- 2 824 520

## Description

### Field of invention

The present invention relates to a pump for pumping liquids containing solids comprising a pump housing having a first opening, which is surrounded by a seat for a rotary wheel, the first opening acting as an inlet when the pump is active, and a rotary wheel mounted on a rotary shaft of the pump, and wherein the rotary wheel is rotated by a motor coupled to the rotary shaft.

The present invention also relates to use of the pump.

### Background of the invention

Trailers, trucks or lorries are used for transporting liquids containing solid matter, e.g. manure from a farm to a biogas plant or from the farm to the fields. These systems often use a hoist for loading or unloading the manure in the trailer. A pump for loading the manure from the storage container and into the tank trailer or truck may be mounted on the hoist, e.g. at the inlet, the pump transferring manure or the like from a container and into the tank on the trailer by suction. The manure is then transported to its destination and is unloaded into another container.

The unloading of the tank trailer or truck may occur through the same hoist using a second unloading pump or via another outlet from the tank on the trailer.

The pump may be blocked by different items present in the manure when loading, which requires dismantling of the pump in order to remove the items blocking the pump wheel.

When unloading the tank trailer through the hoist, the manure is returned through the loading pump. During this procedure the pumping speed of the manure is reduced, which may result in the loading pump being blocked. In order to eliminate this problem, pumps provided with a bypass have been suggested. This known construction increases costs for the entire system and increases the weight of the hoist, which then requires additional hydraulic functions. In addition, the bypass function does not lead to a sufficient flow of liquid through the hoist and thus requires additional time for unloading the trailer or truck.

WO 2007/084056 A1 discloses another example of a pump arrangement for use on trucks for emptying septic tanks, which especially concerns improving durability of the seal arrangement around the rotary shaft by protecting the seal from contact with particles present in the pumped liquid. The rotary wheel of the pump is freely movable in axial direction of the pump shaft. The movement depends on the pressure acting on the suction side and the pumping side of the rotary wheel. When a large item enters the pump inlet and overcomes the higher pressure on the upstream side of the rotary wheel, it moves freely in axial direction away from the impeller seat to release the large item. Thus, the pump is not suitable for use in systems where the unloading of the tank trailer occurs through the same hoist, but with a different unloading pump as described above.

Document SU 1265398 specifies a pump for pumping liquids containing solids, said pump comprising a pump housing having a first opening acting as an inlet when the pump is active, and a rotary screw mounted on a rotary shaft of the pump, wherein the rotary screw is rotated by a motor coupled to the rotary shaft, and wherein the distance between the first opening and the rotary screw is variable by an actuator providing axial displacement, said pump furthermore comprising a control unit for controlling said actuator, wherein said control unit is configured for activating the actuator by means of information on whether the pump is actively pumping in which case the rotary screw is located inside the housing or in case of jamming provides a reversed flow of liquids, in which case the rotary screw is displaced in an axial direction out of the housing and rotates in an opposite direction, wherein said actuator is a hydraulically driven actuator in the form of a piston in a cylinder.

It will be desirable and advantageous to provide a pump arrangement, which eliminates the above outlined disadvantages.

### Summary of the invention

The present invention provides a system which eliminates the above mentioned disadvantages of the prior art pumps by providing a pump for pumping liquids containing solids as disclosed in claim 1, wherein the distance between the first opening and the rotary wheel is variable by one or more actuator(s) providing axial displacement.

In one embodiment of the pump the axial displacement is provided by adjustment of the position of the rotary wheel in axial direction in relation to the first opening and a seat for the rotary wheel by adjusting axial position of a bearing housing for the rotary shaft in a slide bearing, which extends through the pump housing,

In another embodiment of the pump the axial displacement is provided by adjustment of the position of the first opening and the seat in axial direction in relation to the rotary wheel, by adjusting axial position of the first opening and the seat in a slide bearing, which extends through the pump housing.

The present invention thus provides a pump arrangement, which reduces the weight and size of the pump arrangement by eliminating the need for a bypass on the pump and thereby also reduces the need for increasing the size and/or function of the (normally hydraulic) means for moving the hoist. In addition, the pump provides controllable actuation of the axial displacement, which enables return flow of the manure or liquid containing solids through the pump housing of the loading pump during unloading of the trailer or truck and at the same time eliminates the risk of blocking the rotary wheel during loading liquids into the tank of the trailer or truck.

In an embodiment, the axial displacement is controlled by a control unit automatic positioning of the rotary wheel or the first opening and the seat of the rotary wheel around the first opening. Thereby it is possible to perform automatic control of the actuators for axial displacement in order to provide the pump arrangement in position for actively pumping, i.e. during suction mode of the trailer or truck, or for providing a bypass passage through the pump arrangement when the liquid containing solids passes the pump in the opposite direction, e.g. when the trailer or truck unloads solids containing liquids into another storage container.

In addition it is possible to control the axial displacement when axial displacement is performed at regular intervals or when a controller detects reduced pumping speed when the pump is actively pumping.

Alternatively, or in addition to automatic control, one or more fuse(s) may activate the actuators when the pump is blocked by items present in the liquid in order to reduce the risk for damages to the pump even further.

In yet an embodiment, the axial displacement is adjustable by providing means for limiting axial displacement.

The pump may be used at a loading hoist mounted on tank trailers, trucks or lorries, for transporting liquids with suspended solids, and when providing a passage through the pump housing, the present invention solves the problem mentioned in relation with prior art in an efficient, simple and reliable manner in which the manure passes the pump wheel in axial direction without narrowing the passage area, which results in a low or moderate rotation of the pump shaft and the rotary wheel, which also results in a reduced turbine effect of the loading pump during unloading of the trailer or truck.

When, the second pump, which is responsible for emptying the tank on the trailer or truck, is a pump arrangement according to the invention the risk for blocks during pumping and/or suction and possible damage to the pumping arrangements is reduced even further.

The pump is particularly useful for pumping contaminated waster water sewage, sludge or manure, e.g. on trucks for emptying septic tanks or manure tank trailers. As disclosed in claim 10, the pump arrangement is submerged when pumping liquid containing solids to or from a storage container.

When the pumps are used above liquid level they need priming with liquids. The present invention provides a pump in which priming of the pump is faster than prior art pumps since there is room for liberation of air inside the pump housing. By providing a pump in which the rotary wheel can be displaced in axial direction away from and towards the inlet opening, blocking of the rotary wheel with items present in the liquid is also reduced significantly.

Although the pump according to the invention is described for use in a system for pumping and transport of manure, it is to be understood that the pump according to the present invention is also suitable for use in other systems for transport of liquids containing solid matter, especially if there is a risk that the solid matter may block the pump during suction or pumping.

Thus, the pump arrangement according to the present invention is for example also suitable for pumping other liquids containing solids or suitable for use in trucks for emptying septic tanks at houses or buildings situated in remote areas in which no public sewer system is present.

### The drawing

The present invention will be explained in detail with reference to the drawing in which
- fig. 1a: displays a trailer with a hoist and a pumping arrangement, mounted on the hoist for pumping manure from a container into the tank of the trailer,
- fig. 1b: displays an enlarged view of the pump the arrangement displayed in circle C of fig. 1a,
- fig. 2: displays a top view of a pump arrangement according to the invention.
- fig. 3a: displays a side view pump arrangement according to the invention, partly in cross section, according to A-A of fig. 2, with a displaceable rotary wheel in position for suction, i.e. for pumping manure into the tank trailer, and
- fig. 3b: displays the pump housing, partly in cross section, in a side view according to A-A of fig. 2, in which the displaceable rotary wheel is in position for pumping manure from the tank trailer, i.e. with free flow in the area between the rotary wheel and the bottom of the pump housing.

### Detailed description

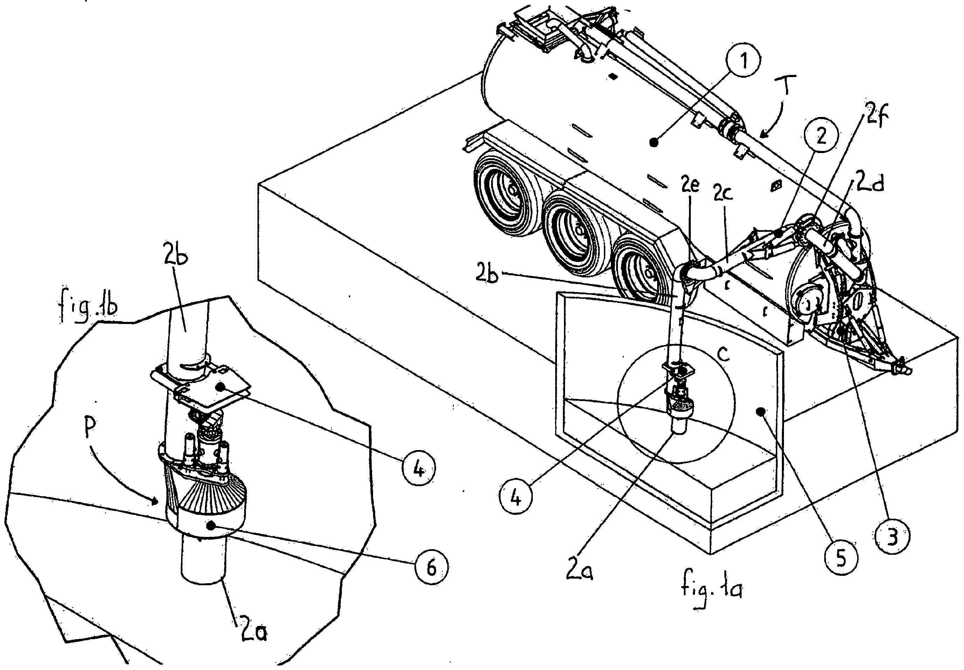

Fig. 1a shows a manure tank trailer (T), which is normally pulled by a tractor, a truck or a similar vehicle (not shown). A pumping hoist (2) is mounted on the tank (1) and a pumping arrangement (P) and a valve (4) is positioned at the lower end of the hoist (2) in the vicinity of the inlet (2a), the pumping arrangement being shown in details in fig. 1b. The pumping hoist (2) is e.g. a hydraulic arm with a flexible pipe arrangement attached thereto or, as shown in fig. 1a, a series of rigid pipes (2b-2d) with one or more adjustable joints (2e-2f) mounted there between. The hoist (2) is manoeuvred, e.g. by hydraulic action of the joints (2e-2f) or the hydraulic arm, and is normally controlled by the driver by means of a control panel (not shown).

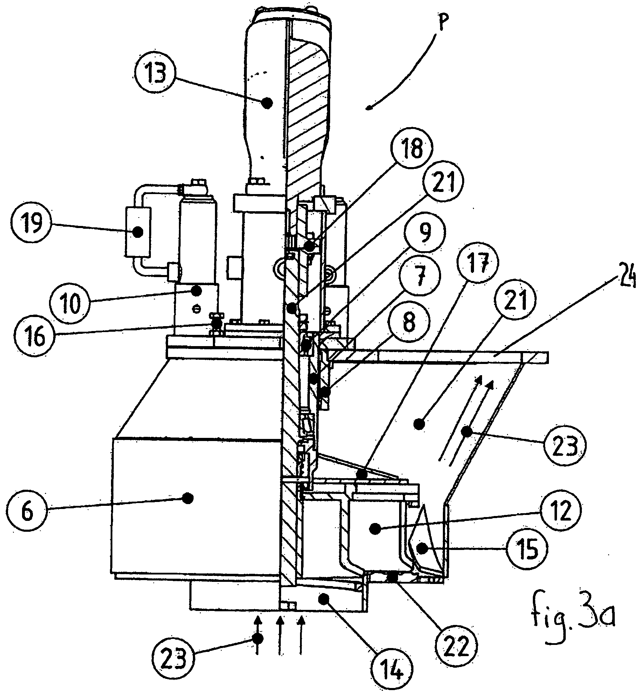

Fig. 3a displays the pumping arrangement (P) according to a preferred embodiment of the present invention. In the right half part of Fig. 3a, the pumping arrangement is displayed in a cross sectional view through the pumping arrangement (P) in "suction mode", i.e. the pumping arrangement (6) pumping manure from the storage container (5) and into the tank (1) on the trailer (T) through the pumping arrangement (P) as indicated by the flow arrows (23).

The pump housing (6) comprises an first opening (14) for the pump, which is preferably provided in the bottom of the pump housing (6), and a second opening (24) is provided in the axially opposite end of the pump housing (6). Vanes (15) are mounted on the inner side of the pump housing (6) around the rotary wheel (12) in order to establish the desired flow properties and thus also the desired pumping action of the pump.

A hydraulic motor (13) is attached to the rotary shaft (20) of the pump via a coupling (18). The motor rotates the rotary shaft (20) and thereby also the rotary wheel (12) attached thereto. The rotary shaft (20) passes through a roller bearing (9) in the bearing housing (7) in the axial direction thereof. Thereby free rotation of the shaft (20) in relation to the bearing housing (7) is ensured. The bearing housing (7) is provided with gaskets (not shown). The bearing housing (7) passes through the pump housing (6) in a slide bearing (8). The slide bearing (8) is preferably placed in the top wall of the pump housing (6) and extend into the interior (21) of the pump housing (6). The bearing housing (7) has an end plate (17) attached thereto, which abuts the rotary wheel (12) in the pump housing (6). In "suction mode" the rotary wheel (12) is positioned against the first opening (14), i.e. the inlet, and the bottom (22) of the pump housing (6), which may serve as a seat (22) for the rotary wheel (12) when it is in position for pumping, i.e. during the "suction mode" of the trailer or truck.

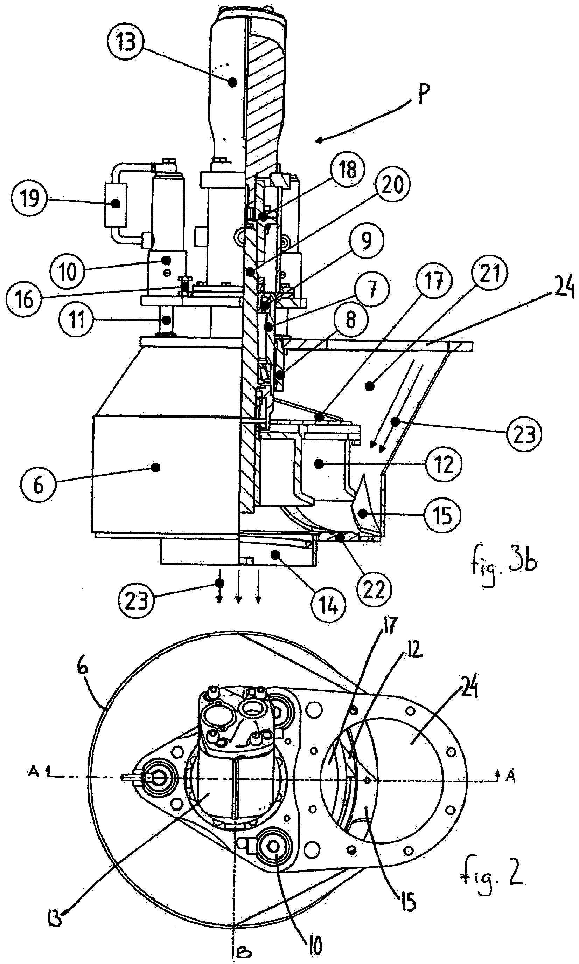

Fig. 3b shows the pumping arrangement (P) according to the invention in "pumping mode", in which the pumping direction is reversed, i.e. the second opening (24) acts as an inlet and the first opening (14) act as an outlet of the pump housing (6). A second pump (3) pumps manure from the tank (1) and into a second container (5), e.g. at a biogas plant. The second pump (3) pumps the manure through the hoist (2) and through the pumping arrangement (P) as indicated by the reversed flow arrows (23).

During the pumping mode the rotary wheel (12) is in an elevated position by one or more actuators (10) moves the bearing housing (7) in the slide bearing (8) and thereby also the end plate (17) and elevates the rotary shaft (20) and the rotary wheel (12) mounted thereon in axial direction away from the first opening (14) in the bottom of the pump housing (6).

The actuator(s) are preferably hydraulic actuators, such as cylinder(s) (10) and piston(s) (11) providing the axial displacement of the rotary wheel (12) in the pump housing (6). Alternatively, the actuators may be pneumatically actuated or mechanical actuators, such as a spindle arrangement or the like. If several actuators are present for axial displacement of the rotary wheel (12), they are preferably distributed evenly around the circumference of the pump housing.

Hereby the rotary shaft (20) and the rotary wheel (12) is displaced to a position above the bottom (22) of the pump housing (6) in the interior (21) of the pump housing (6).

The degree of displacement of the rotary wheel (12) in the pump housing (6) may be limited and/or adjusted by adjusting means (16), e.g. by means of an adjustable bolt and a check nut.

The displacement of the rotary wheel (12) in direction away from the first opening (14) enables free passage of manure from the tank (1) via the hoist (2) and into a second container when the trailer (T) is in "pumping mode".

If a large item present in the manure gets stuck between the rotary wheel (12) and the pump housing (6) or the vanes (15) during "suction mode", the rotary wheel (12) may block, whereby the pumping action is stopped. Similarly, if the rotary wheel gets tangled up into several smaller or flexible/fibrous items present in the manure, such as e.g. straw, hay or the like, the pumping action is reduced or even blocked. In such a situation, the pumping wheel is displaced away from the first opening (14) manually or automatically. In case of automatic axial displacement of the rotary wheel (12), a controller in a control panel (not shown) may control the displacement, e.g. if the controller detects reduced pumping speed. Then the controller will activate the displacement means for a predetermined time interval. Alternatively, axial displacement of the rotary wheel (12) is activated automatically for a number of times in a preset time interval during a cycle when the trailer (T) or truck is in suction mode. Alternatively, activation of axial displacement of the rotary wheel (12) may be started manually by the driver in case he detects blockage of the pump arrangement (P) during suction mode.

Automatically controlled elevation and lowering of the rotary wheel (12) may also serve for adjustment and/or control of the power consumption and/or the performance of the pump arrangement (P) during suction mode.

When items block the pump arrangement (P) there is a risk that the pump is damaged. This may in alternative embodiment be reduced by one or more fuse(s) (19) activating the displacement means (10, 11).

In an alternative embodiment (not shown) of the pump arrangement according to the invention, the bearing housing (7) and the end plate (17) are mounted in a fixed position inside the pump housing, i.e. not axially displaceable and the rotary shaft and the rotary wheel (12) are mounted In a rotatable manner through the bearing housing (7). Thus, the rotary wheel is not axially displaceable inside the pump housing. Instead, the first opening (14) and the seat (22) is mounted in axially displaceable manner in a slide bearing similar to the above described slide bearing (8), said slide bearing (8) enabling axial displacement of the inlet opening (14) and the seat (22) towards and away from the rotary wheel (12) by means of actuators (10, 16) as described above. This alternative slide bearing preferably extends through the bottom wall of the pump housing and surrounds the first opening (14) and the seat area (22).

Finally, if the pump arrangement (P) according to the invention is also used as the second pump (3) on the trailer or truck, which is active during "pumping mode", the risk for blocks during pumping and/or suction and possible damage to the pumping arrangements is even further reduced.

## Claims

1. A pump for pumping liquids containing solids, in the form of manure, said pump comprising a pump housing having a first opening, which is surrounded by a seat for a rotary wheel, the first opening acting as an inlet when the pump is active, and a rotary wheel mounted on a rotary shaft of the pump, and wherein the rotary wheel is rotated by a motor coupled to the rotary shaft, and wherein the distance between the first opening (14) and the rotary wheel (12) is variable by one or more actuator(s) (10, 11) providing axial displacement, wherein said pump furthermore comprises a control unit for controlling said actuator(s) (10, 11), wherein said control unit is configured for activating the actuator(s) (10, 11) by means of information on whether the pump is actively pumping; in which case the rotary wheel is displaced in an axial direction towards the inlet opening; or passively provides an outlet for a reversed flow of liquids; in which case the rotary wheel is displaced in an axial direction away from the inlet opening; wherein said actuator(s) is/are hydraulically or pneumatically driven actuator(s) in the form of a piston in a cylinder.

2. A pump according to claim 1 wherein the one or more actuator(s) (10, 11) axial ensures displacement by adjustment of the position of the rotary wheel (12) in axial direction in relation to the first opening (14) and a seat (22) for the rotary wheel (12), by adjusting axial position of a bearing housing (7) for the rotary shaft (20) in a slide bearing (8), which extends through the pump housing (6).

3. A pump according to any of the claims 1 or 2, wherein the one or more actuator(s) are hydraulically or pneumatically driven, such as by comprising a piston (11) in a cylinder (10) or are mechanical actuators, such as by comprising a spindle arrangement

4. A pump according to any of the claims 1-3, furthermore comprising one or more fuse(s) (19) which are provided as activation means for the one or more actuator(s) (10, 11).

5. A pump according to any of the claims 1-4, wherein said pump is provided with means (16) for limiting the axial displacement movement performed by the actuator(s) (10, 11).

6. A pump according to any of the claims 1 - 5, wherein said control unit is further configured for activating the actuator(s) (10, 11) based on a sequence in which the actuator(s) (10, 11) are activated at predetermined time interval when the control unit detects reduced pumping speed, or are activated automatically for a number of times in a preset time interval during a cycle when the pump (P) is actively pumping.

7. Use of a pump according to any of the claims 1-6, wherein the pump (P) is mounted on a hoist (2) of a trailer or truck (T) and is used for pumping liquids containing solids from a storage container, through the hoist (2) and into a tank (1) on the truck or trailer (T).

8. Use according to claim 7, wherein the one or more actuator(s) (10, 11) are controlled by a control unit mounted on the truck or trailer (T).

9. Use according to claim 7 or 8, wherein during unloading of the liquid containing solids from the tank (1) on the trailer or truck (T) a second pump (3) is used for pumping the liquid containing solids through the hoist (2), via the pump housing (6), and into another storage container, and wherein the one or more actuator(s) (10, 11) provide a passage through the pump housing (6) by ensuring axial displacement of the rotary wheel (12) in axial direction in relation to the first opening (14) and a seat (22) for the rotary wheel (12),
by adjusting axial position of a bearing housing (7) for the rotary shaft (20) in a slide bearing (8), which extends through the pump housing (6).

10. Use according to claim 7, wherein the pump (P) is mounted at the inlet (2a) of the hoist (2), and is submerged into the liquid in the storage container, when the pump (P) pumps the liquids containing solids into the tank (1) on the trailer or truck (T) or when the liquid is pumped in the reverse direction.

11. Use according to claim 9, wherein the one or more actuator(s) (10, 11) are activated for a predetermined time interval when the control unit detects reduced pumping speed, or are activated automatically for a number of times in a preset time interval during a cycle when the trailer (T) or truck is in suction mode.

12. Use according to any of the claims 7-11, wherein one or more fuse(s) (19) activating the one or more actuators (10, 11).

13. Use according to any of the claims 7-12, wherein the second pump (3) is a pump according to any of claims 1-6.

14. Use according to any of the claims 7 -13, wherein the liquid is waste water, sewage, manure
and/or sludge.

## Patentansprüche

1. Pumpe zum Pumpen von Flüssigkeiten, die Feststoffe in der Form von Gülle enthalten, wobei die Pumpe ein Pumpengehäuse umfasst, das eine erste Öffnung aufweist, die von einem Sitz für ein Drehrad umgeben ist, wobei die erste Öffnung als ein Einlass agiert, wenn die Pumpe aktiv ist, und ein Drehrad, das auf einem Drehschaft der Pumpe montiert ist, und wobei das Drehrad von einen Motor gedreht wird, der mit dem Drehschaft gekoppelt ist, und wobei der Abstand zwischen der ersten Öffnung (14) und dem Drehrad (12) durch einen oder mehrere Aktuator(en) (10, 11), die eine axiale Verschiebung bereitstellen, variierbar ist, wobei die Pumpe ferner eine Regeleinheit zum Regeln des (der) Aktuators (Aktuatoren) umfasst, wobei die Regeleinheit zum Aktivieren des (der) Aktuators (Aktuatoren) (10, 11) mittels Information darüber, ob die Pumpe aktiv pumpt, konfiguriert ist; in welchem Fall das Drehrad in eine axiale Richtung entgegen der Einlassöffnung verschoben wird; oder passiv für eine umgekehrte Strömung von Flüssigkeiten einen Auslass bereitstellt; in welchem Fall das Drehrad in eine axiale Richtung weg von der Einlassöffnung verschoben wird; wobei der (die) Aktuator(en) hydraulisch betriebene Aktuator(en) in Form eines Kolbens in einem Zylinder ist/sind.

2. Pumpe nach Anspruch 1, wobei der eine oder die mehreren Aktuator(en) (10, 11) durch eine Anpassung der Position des Drehrads (12) in axialer Richtung in Bezug auf die erste Öffnung (14) und einem Sitz (22) für das Drehrad (12) durch Anpassen der axialen Position eines Lagergehäuses (7) für den Drehschaft (20) in einem Gleitlager (8), das sich durch das Pumpengehäuse (6) erstreckt, axiales Verschieben sicherstellen.

3. Pumpe nach einem der Ansprüche 1 oder 2, wobei der eine oder die mehreren Aktuator(en) hydraulisch oder pneumatisch angetrieben sind, wie etwa beim Aufweisen eines Kolbens (11) in einem Zylinder (10), oder mechanische Aktuatoren sind, wie etwa beim Aufweisen einer Spindelanordnung.

4. Pumpe nach einem der Ansprüche 1 - 3, ferner umfassend eine oder mehrere Sicherung(en) (19), die als Aktivierungsmittel für den einen oder die mehreren Aktuator(en) (10, 11) bereitgestellt sind.

5. Pumpe nach einem der Ansprüche 1 - 4, wobei die Pumpe bereitgestellt ist mit Mittel (16) zum Begrenzen der axialen Verschiebung, die von dem (den) Aktuator(en) (10, 11) durchgeführt wird.

6. Pumpe nach einem der Ansprüche 1 - 5, wobei die Regeleinheit ferner zum Aktivieren des (der) Aktuators (Aktuatoren) (10, 11) konfiguriert ist, basierend auf einer Sequenz, in welcher der (die) Aktuator(en) (10, 11) in einem vorab bestimmten Zeitintervall aktiviert werden, wenn die Regeleinheit eine reduzierte Pumpgeschwindigkeit feststellt, oder bei einer Anzahl von Vorkommnissen in einem voreingestellten Zeitintervall während eines Zyklus, wenn die Pumpe (P) aktiv pumpt, automatisch aktiviert werden.

7. Verwendung einer Pumpe nach einem der Ansprüche 1 - 6, wobei die Pumpe (P) an einem Hubwerk (2) eines Anhängers oder Lastwagens (T) montiert ist und zum Pumpen von Flüssigkeiten, die Feststoffe enthalten, aus einem Speichercontainer durch das Hubwerk (2) und in einen Tank (1) auf dem Anhänger oder Lastwagen (T) verwendet wird.

8. Verwendung nach Anspruch 7, wobei der eine oder die mehreren Aktuator(en) (10, 11) durch eine Regeleinheit geregelt werden, die an dem Lastwagen oder Anhänger (T) montiert ist.

9. Verwendung nach Anspruch 7 oder 8, wobei während des Abladens der Flüssigkeit, die Feststoffe enthält, aus dem Tank (1) auf dem Anhänger oder Lastwagen (T), eine zweite Pumpe (3) zum Pumpen der Flüssigkeit, die Feststoffe enthält, durch das Hubwerk (2), über das Pumpengehäuse (6), und in einen anderen Speichercontainer verwendet wird, und wobei der eine oder die mehreren Aktuator(en) (10, 11) durch Sicherstellen einer axialen Verschiebung des Drehrads (12) in axialer Richtung in Bezug auf die erste Öffnung (14) und einem Sitz (22) für das Drehrad (12) einen Durchgang durch das Pumpengehäuse (6) durch Anpassen einer axialen Position des Lagergehäuses (7) für den Drehschaft (20) in einem Gleitlager (8), das sich durch das Pumpengehäuse (6) erstreckt, bereitstellen.

10. Verwendung nach Anspruch 7, wobei die Pumpe (P) an den Einlass (2a) des Hubwerks (2) montiert ist, und in die Flüssigkeit in dem Speicherbehälter eingetaucht ist, wenn die Pumpe (P) die Flüssigkeiten, die Feststoffen enthalten, in den Tank (1) auf dem Anhänger oder Lastwagen (T) pumpt, oder wenn die Flüssigkeit in die umgekehrte Richtung gepumpt wird.

11. Verwendung nach Anspruch 9, wobei der eine oder die mehreren Aktuator(en) (10, 11) für ein vorab bestimmtes Zeitintervall bereitgestellt sind, wenn die Regeleinheit eine reduzierte Pumpgeschwindigkeit feststellt, oder bei einer Anzahl von Vorkommnissen in einem voreingestellten Zeitintervall während eines Zyklus, wenn der Anhänger (T) oder Lastwagen sich im Absaugmodus befinden, automatisch aktiviert werden.

12. Verwendung nach einem der Ansprüche 7 - 11, wobei eine oder mehrere Sicherung(en) (19) den einen oder die mehreren Aktuatoren (10, 11) aktivieren.

13. Verwendung nach einem der Ansprüche 7 - 12, wobei die zweite Pumpe (3) eine Pumpe nach einem der Ansprüche 1 bis 6 ist.

14. Verwendung nach einem der Ansprüche 7 - 13, wobei die Flüssigkeit Wasser, Abwasser, Gülle und/oder Klärschlamm ist.

## Revendications

1. Pompe pour pomper des liquides contenant des solides, sous la forme d'engrais, ladite pompe comprenant un carter de pompe présentant une première ouverture, qui est entourée par un siège pour une roue rotative, la première ouverture agissant comme une entrée lorsque la pompe est active, et une roue rotative montée sur un arbre rotatif de la pompe, et dans laquelle la roue rotative est tournée par un moteur couplé à l'arbre rotatif, et dans laquelle la distance entre la première ouverture (14) et la roue rotative (12) est variable par un ou plusieurs actionneurs (10, 11) fournissant un déplacement axial, dans laquelle ladite pompe comprend en outre une unité de commande pour la commande dudit/desdits actionneurs (10, 11), dans laquelle ladite unité de commande est configurée pour activer le(s) actionneur(s) (10, 11) à l'aide d'informations concernant le fait que la pompe soit en train de pomper activement; auquel cas la roue rotative est déplacée dans une direction axiale vers l'ouverture d'entrée ; ou fournit passivement une sortie pour un flux inversé de liquides ; auquel cas la roue rotative est déplacée dans une direction axiale loin de l'ouverture d'entrée ; dans laquelle ledit/lesdits actionneur(s) est/sont un/des actionneur(s) entraîné(s) par voie hydraulique ou pneumatique sous la forme d'un piston dans un cylindre.

2. Pompe selon la revendication 1, dans laquelle les un ou plusieurs actionneur(s) (10, 11) assure(nt) axialement le déplacement par ajustement de la position de la roue rotative (12) dans une direction axiale par rapport à la première ouverture (14) et un siège (22) pour la roue rotative (12), par ajustement de la position axiale d'un logement de palier (7) pour l'arbre rotatif (20) dans un palier coulissant (8), qui s'étend à travers le carter de pompe (6).

3. Pompe selon l'une quelconque des revendications 1 ou 2, dans laquelle les un ou plusieurs actionneur(s) sont entraînés par voie hydraulique ou pneumatique, par exemple en comprenant un piston (11) dans un cylindre (10) ou sont des actionneurs mécaniques, par exemple en comprenant un agencement de broche.

4. Pompe selon l'une quelconque des revendications 1 à 3, comprenant en outre un ou plusieurs fusible(s) (19) qui sont prévus comme des moyens d'activation pour les un ou plusieurs actionneur(s) (10, 11).

5. Pompe selon l'une quelconque des revendications 1 à 4, dans laquelle ladite pompe est dotée de moyens (16) pour limiter le mouvement de déplacement axial réalisé par le(s) actionneur(s) (10, 11).

6. Pompe selon l'une quelconque des revendications 1 à 5, dans laquelle ladite unité de commande est en outre configurée pour activer le(s) actionneur(s) (10, 11) sur la base d'une séquence, dans laquelle le(s) actionneur(s) (10, 11) sont activés à un intervalle de temps prédéterminé lorsque l'unité de commande détecte une vitesse de pompage réduite, ou sont activés automatiquement pour un nombre de fois dans un intervalle de temps prédéfini pendant un cycle lorsque la pompe (P) est en train de pomper activement.

7. Utilisation d'une pompe selon l'une quelconque des revendications 1 à 6, dans laquelle la pompe (P) est montée sur un treuil (2) d'une remorque ou d'un camion (T) et est utilisée pour pomper des liquides contenant des solides d'un contenant de stockage, à travers le treuil (2) et dans un réservoir (1) sur le camion ou la remorque (T).

8. Utilisation selon la revendication 7, dans laquelle les un ou plusieurs actionneur(s) (10, 11) sont commandés par une unité de commande montée sur le camion ou la remorque (T).

9. Utilisation selon la revendication 7 ou 8, dans laquelle pendant le déchargement du liquide contenant des solides du réservoir (1) sur la remorque ou le camion (T), une seconde pompe (3) est utilisée pour pomper le liquide contenant des solides à travers le treuil (2), via le carter de pompe (6), et dans un autre contenant de stockage, et dans laquelle les un ou plusieurs actionneur(s) (10, 11) fournissent un passage à travers le carter de pompe (6) en assurant un déplacement axial de la roue rotative (12) dans une direction axiale par rapport à la première ouverture (14) et un siège (22) pour la roue rotative (12),
en ajustant la position axiale d'un logement de palier (7) pour l'arbre rotatif (20) dans un palier coulissant (8), qui s'étend à travers le carter de pompe (6).

10. Utilisation selon la revendication 7, dans laquelle la pompe (P) est montée sur l'entrée (2a) du treuil (2), et est immergée dans le liquide dans le contenant de stockage, lorsque la pompe (P) pompe les liquides contenant des solides dans le réservoir (1) sur la remorque ou le camion (T) ou lorsque le liquide est pompé dans la direction inverse.

11. Utilisation selon la revendication 9, dans laquelle les un ou plusieurs actionneur(s) (10, 11) sont activés pour un intervalle de temps prédéterminé lorsque l'unité de commande détecte une vitesse de pompage réduite, ou sont activés automatiquement pour un nombre de fois dans un intervalle de temps prédéfini pendant un cycle lorsque la remorque (T) ou le camion est en mode d'aspiration.

12. Utilisation selon l'une quelconque des revendications 7 à 11, dans laquelle un ou plusieurs fusible(s) (19) activent les un ou plusieurs actionneur(s) (10, 11).

13. Utilisation selon l'une quelconque des revendications 7 à 12, dans laquelle la seconde pompe (3) est une pompe selon l'une quelconque des revendications 1 à 6.

14. Utilisation selon l'une quelconque des revendications 7 à 13, dans laquelle le liquide consiste en des eaux usées, des aux d'égout, de l'engrais et/ou de la boue.
